# EUROPEAN PATENT APPLICATION

(11) **EP 4 737 040 A1**
(43) Date of publication of application: **06.05.2026**
(21) Application number: 24936892.9
(22) Date of filing: 26.04.2024
(51) Int. Cl.: B23F 23/12, B23B 5/00, B23Q 17/20

(54) **MACHINING METHOD FOR GEAR COMPONENT, PROGRAM THEREFOR, AND MACHINING DEVICE**

(71) Applicant: Yamazaki Mazak Corporation, Niwa-gun, Aichi 480-0197 (JP)
(72) Inventor: HAYASHI Toshiki, Niwa-gun, Aichi 480-0197 (JP); TAJIMA Jun, Niwa-gun, Aichi 480-0197 (JP); MISHINA Masahiro, Niwa-gun, Aichi 480-0197 (JP); YAMAMOTO Yuki, Niwa-gun, Aichi 480-0197 (JP)
(74) Representative: TBK
(86) International application number: PCT/JP2024/016448
(87) International publication number: WO 2025/224974

(57) **Abstract**

The present invention provides a gear part machining method, a program, and a machining apparatus that accurately machine a non-toothed part. The machining method according to the present invention includes: causing a workpiece spindle to hold one end portion of a cylindrical workpiece with an axis of the cylindrical workpiece aligned with a rotation machining axis. The cylindrical workpiece includes a toothed part formed by performing tooth forming on a part of a circumferential surface of the cylindrical workpiece. The part of the circumferential surface extends along a direction of the axis of the cylindrical workpiece. The toothed part is measured to calculate a misalignment between a center axis of the toothed part and the rotation machining axis. Another end portion of the cylindrical workpiece is machined eccentrically relative to the rotation machining axis based on the misalignment. The program causes the workpiece spindle to hold the one end portion of the cylindrical workpiece with the axis of the cylindrical workpiece aligned with the rotation machining axis, the cylindrical workpiece including the toothed part formed by performing the tooth forming on the part of the circumferential surface of the cylindrical workpiece, the part of the circumferential surface extending along the direction of the axis of the cylindrical workpiece; causes the toothed part to be measured; causes the misalignment between the center axis of the toothed part and the rotation machining axis to be calculated based on the measured measurement value; and causes the other end portion of the cylindrical workpiece to be machined eccentrically relative to the rotation machining axis based on the calculated misalignment. The machining apparatus includes a first workpiece spindle, a tool holder, a mover and a controller configured to control operations of these elements. The machining apparatus follows the above-described machining program.

## Description

### Technical Field

The present invention relates to a gear part machining method, a program thereof, and a machining apparatus. In particular, the present invention relates to a gear part machining method for machining a non-toothed part, a program for machining a non-toothed part, and a machining apparatus that machines a non-toothed part.

### Background Art

A tooth forming method is known in which a hobbing cutter is rotated and pressed against a rotating workpiece to cut the rotating workpiece into a gear part. If a rotation axis of a rotation table is not aligned with an axis of the workpiece, gear teeth on the gear part are formed eccentrically.

For example, Patent Literature 1 discloses such a machining method that in tooth forming using a hobbing machine, a rotation phase of the rotation table and a cutting depth of the hobbing cutter are corrected to cancel the eccentricity amount between the rotation axis of the rotation table and the axis of the workpiece. According to Patent Literature 1, even if the workpiece is attached to the rotation table eccentrically, the workpiece can be machined into a gear highly accurately.

### Citation List

### Patent Literature

PTL1: WO/2011/129008.

### Summary of Invention

### Technical Problem

Incidentally, when a multitasking machine is used, it is possible to: attach a hobbing cutter to the multitasking machine to perform gear-forming machining on, for example, a circumferential surface of the workpiece, thereby forming a toothed part; and change the tool to subsequently perform cutting on another part of the workpiece. In this respect, there may be a case that after tooth forming of the workpiece, the workpiece is temporarily removed from a workpiece spindle, and then attached again to subject the workpiece to rotation cutting. In this case, a rotation axis of the workpiece spindle can not be aligned with a center axis of the toothed part of the attached workpiece, with the result that rotation cutting can not be performed accurately. The same applies in a case that a tooth-formed part is attached to a machining apparatus to subject the tooth-formed part to rotation cutting.

It is an object of the present invention to provide a gear part machining method for accurately machining a part of a workpiece other than a toothed part, a program for accurately machining a part of a workpiece other than a toothed part, and a machining apparatus that accurately machines a part of a workpiece other than a toothed part.

### Solution to Problem

A gear part machining method according to the present invention includes causing a workpiece spindle to hold one end portion of a cylindrical workpiece with an axis of the cylindrical workpiece aligned with a rotation machining axis. The cylindrical workpiece includes a toothed part formed by performing tooth forming on a part of a circumferential surface of the cylindrical workpiece. The part of the circumferential surface extends along the axis of the cylindrical workpiece. The toothed part is measured to calculate a misalignment between a center axis of the toothed part and the rotation machining axis. Another end portion of the cylindrical workpiece is machined eccentrically relative to the rotation machining axis based on the misalignment.

A machining program according to the present invention causes a workpiece spindle to hold one end portion of a cylindrical workpiece with an axis of the cylindrical workpiece aligned with a rotation machining axis. The cylindrical workpiece includes a toothed part formed by performing tooth forming on a part of a circumferential surface of the cylindrical workpiece. The part of the circumferential surface extends along the axis of the cylindrical workpiece. The gear-part machining program causes the toothed part to be measured. The gear-part machining program causes a misalignment between a center axis of the toothed part and the rotation machining axis to be calculated based on the measured measurement value. The gear-part machining program causes another end portion of the cylindrical workpiece to be machined eccentrically relative to the rotation machining axis based on the calculated misalignment.

A machining apparatus according to the present invention includes a first workpiece spindle, a tool holder, a mover, and a controller. The first workpiece spindle is configured to hold a workpiece so as to be rotatable. The tool holder is configured to hold a measurement instrument or a tool. The mover is configured to move the first workpiece spindle and the tool holder relative to each other. The controller is configured to control an operation of the first workpiece spindle, an operation of the tool holder, and an operation of the mover. Based on a machining program, the machining apparatus is configured to cause the first workpiece spindle to hold one end portion of the workpiece that has a cylindrical shape with an axis of the cylindrical workpiece aligned with a rotation machining axis. The cylindrical workpiece includes a toothed part formed by performing tooth forming on a part of a circumferential surface of the cylindrical workpiece. The part of the circumferential surface extends along the axis of the cylindrical workpiece. Based on the machining program, the machining apparatus is configured to measure the toothed part using the measurement instrument held by the tool holder. Based on the machining program, the machining apparatus is configured to calculate a misalignment between a center axis of the toothed part and the rotation machining axis based on the measured measurement value. Based on the machining program, the machining apparatus is configured to, using the tool held by the tool holder, machine another end portion of the cylindrical workpiece eccentrically relative to the rotation machining axis based on the calculated misalignment.

The above-described invention ensures that a part of a workpiece other than a toothed part is accurately machined.

### Brief Description of Drawings

[FIG. 1] FIG. 1 is a perspective view (partially a block diagram) of main components of a machining apparatus according to one embodiment of the present invention.
[FIG. 2] FIG. 2 is a side cross-sectional view of a workpiece according to the one embodiment of the present invention.
[FIG. 3] FIG. 3 is a flow chart of a machining method according to the one embodiment of the present invention.
[FIG. 4A] FIG. 4A is a side view of a cylindrical material attached to a first workpiece spindle.
[FIG. 4B] FIG. 4B is a side cross-sectional view of the cylindrical material that is being subjected to turning and drilling.
[FIG. 4C] FIG. 4C is a side cross-sectional view of the cylindrical material (workpiece) that is being subjected to tooth forming.
[FIG. 5A] FIG. 5A is a side cross-sectional view of the workpiece attached again to the first workpiece spindle.
[FIG. 5B] FIG. 5B is a side cross-sectional view of the workpiece that is being subjected to measurement of tooth portion pitch.
[FIG. 5C] FIG. 5C is a side cross-sectional view of the workpiece that is being subjected to eccentric machining.
[FIG. 6A] FIG. 6A is a front view of the workpiece and illustrates a center axis misalignment in another embodiment.
[FIG. 6B] FIG. 6B is a front view of the workpiece and illustrates correction of the center axis misalignment in the other embodiment.

### Description of Embodiments

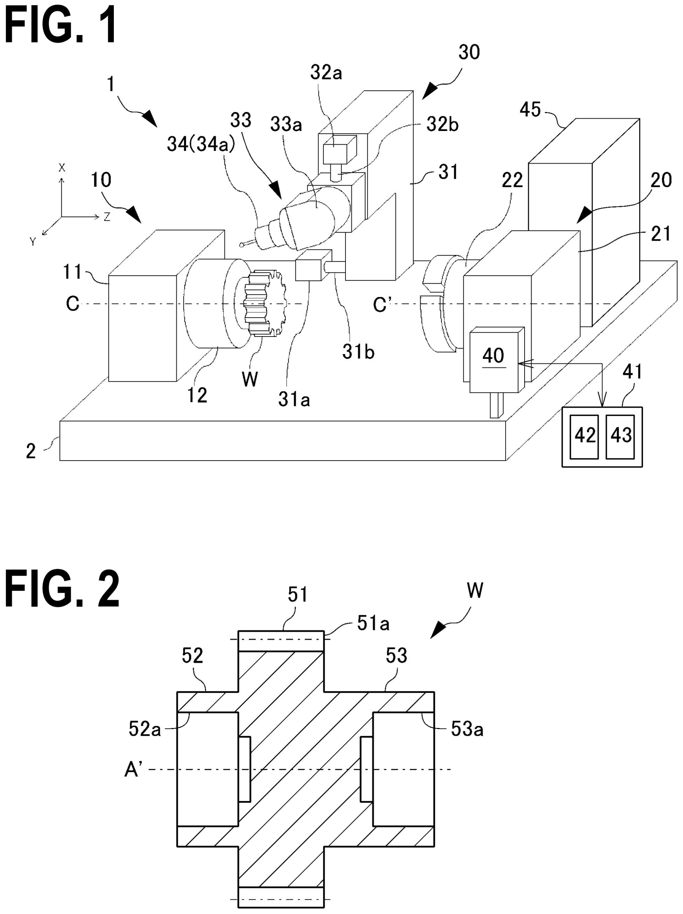

By referring to FIGs. 1 to 5C, description will be made in detail with regard to a gear part machining method according to the present invention, a program according to the present invention, and a machining apparatus according to the present invention.

First, description will be made with regard to the machining apparatus, which is used in the gear part machining method.

As illustrated in FIG. 1, a machining apparatus 1 is a numerical control machine tool that operates according to a program input into the numerical control machine tool. The machining apparatus 1 is preferably a multitasking machine that has an automatic tool changing function. In this example, the machining apparatus 1 includes, on a base 2, one spindle unit on the left side and another spindle unit on the right side in the drawing orientation. (In the description of FIG. 1, directions such as left, right, and front are based on the drawing orientation. The same applies in the following descriptions referring to other drawings.) Among the left and right spindle units, the left spindle unit is a first spindle unit 10, to which the workpiece W is attached; and the right spindle unit is a second spindle unit 20. The first spindle unit 10, which is on the left side, includes a workpiece headstock 11 and a first workpiece spindle 12. The first spindle unit 10 causes the first workpiece spindle 12 to hold the workpiece W and support the workpiece W so as to be rotatable about a rotation machining axis C of the first workpiece spindle 12. The second spindle unit 20, which is on the right side, includes a workpiece headstock 21 and a second workpiece spindle 22. Similarly to the first spindle unit 10, the second spindle unit 20 causes the second workpiece spindle 22 to hold the workpiece W and support the workpiece W so as to be rotatable about a rotation machining axis C' of the second workpiece spindle. The second spindle unit 20 is used as necessary. It is to be noted that the first workpiece spindle 12 and the second workpiece spindle 22 are provided to face each other and that a spindle movement mechanism is provided to change the relative distance between the first workpiece spindle 12 and the second workpiece spindle 22 and to transfer the workpiece between the first workpiece spindle 12 and the second workpiece spindle 22. Due to this configuration, the rotation machining axis C and the rotation machining axis C' are provided to align with each other, and the movement caused by the spindle movement mechanism proceeds along the rotation machining axis C.

The machining apparatus 1 further includes a column unit 31. The column unit 31 is capable of moving horizontally in the right and left directions on the base 2. The column unit 31 is mounted on the base 2 so as to be movable parallelly in the right and left directions along a Z axis. The position of the column unit 31 in the Z axis direction is adjusted by a combination of a Z-axis servo motor 31a and a Z-axis ball screw 31b. A swing shaft 33 is mounted on a front side of the column unit 31 via a combination of an X-axis servo motor 32a and an X-axis ball screw 32b. This configuration enables the swing shaft 33 to parallelly move in the X axis direction and the Z axis direction. The swing shaft 33 is also rotationally movable about a rotation axis extending in the Y axis direction, and includes a tool holder 33a at a leading end portion of the swing shaft 33. The tool holder 33a is rotatable about an axis that is orthogonal to a Y axis. Thus, a series of driving mechanisms, including the column unit 31, the Z-axis servo motor 31a, the Z-axis ball screw 31b, the swing shaft 33, the X-axis servo motor 32a, and the X-axis ball screw 32b, make up a mover 30. The mover 30 enables the tool holder 33a to move relative to the first workpiece spindle 12 and the second workpiece spindle 22.

To the tool holder 33a, a tool or a similar device 34 is attached. As the tool or the similar device 34, a measurement instrument such as a touch probe 34a, as illustrated, may be used; or a tool such as a cutting tool may be used. The touch probe 34a brings its leading end portion into contact with a surface of the workpiece W to obtain coordinates of its contact position with respect to the base 2. Thus, the touch probe 34a is used to measure dimensions of the workpiece W. The touch probe 34a may be changed to a hobbing cutter, described later, to perform tooth forming on the workpiece W to form a toothed part. Thus, the tool holder 33a depends on the tool or the similar device 34 attached to the tool holder 33a; that is, the tool holder 33a may be used as a machining device that machines the workpiece W or as a measurement device that measures the workpiece W. An automatic tool changer 45 is provided on the right side of the base 2. The automatic tool changer 45 is capable of moving the tool holder 33a toward the automatic tool changer 45, automatically changing the measurement instrument or the cutting tool, and causing the tool holder 33a to hold the measurement instrument or the cutting tool.

The machining apparatus 1 further includes a controller 40. The controller 40 performs numerical control to control an operation of the first spindle unit 10, an operation of the second spindle unit 20, an operation of the mover 30, and an operation of the automatic tool changer 45. The controller 40 includes an input interface, not illustrated, for a worker to operate, and is connected to an arithmetic operator 41. The arithmetic operator 41 includes a storage 42 and an operator 43. The storage 42 at least stores a gear-part machining program. The arithmetic operator 41 transmits a signal to the controller 40 to control an operation of the machining apparatus 1 according to the gear-part machining program retrieved from the storage 42. In this manner, the arithmetic operator 41 is capable of causing the machining apparatus 1 to operate to perform the gear part machining method, described later. The operator 43 obtains, from the controller 40, a measurement value obtained by the touch probe 34a, such as data of the coordinates of the workpiece W. Based on the measurement value, the operator 43 is capable of calculating a misalignment, described later, between the center axis A and the rotation machining axis C. It is to be noted that the arithmetic operator 41 may be incorporated in the controller 40.

Next, a gear part machining method using the machining apparatus 1 will be described.

As illustrated in FIG. 2, the gear part to be obtained by machining the workpiece W is a stepped cylindrical part. The stepped cylindrical part includes a toothed part that forms a gear on a part of a circumferential surface of the stepped cylindrical part, the part of the circumferential surface extending in a direction along an axis A' of the stepped cylindrical part. After the workpiece W has been machined to form the toothed part, one end portion of the workpiece W in the direction along the axis A' is held, and another end portion of the workpiece W in the direction along the axis A' is cut into the stepped cylindrical part. In this example, a toothed part 51 is provided at a center in the right-left direction on the drawing sheet. The toothed part 51 includes a gear tooth portion 51a on an outer circumferential surface of the toothed part 51. On opposing right-left sides of the toothed part 51, substantially cylindrical shaft parts 52 and 53 are provided. Thus, the gear part has a substantially stepped cylindrical shape. The shaft parts 52 and 53 respectively have bottomed holes 52a and 53a. Each of the holes 52a and 53a is formed by cutting of an end face of the shaft part 52 or 53 toward a center of the shaft part 52 or 53. The holes 52a and 53a are formed as, for example, bearing journals.

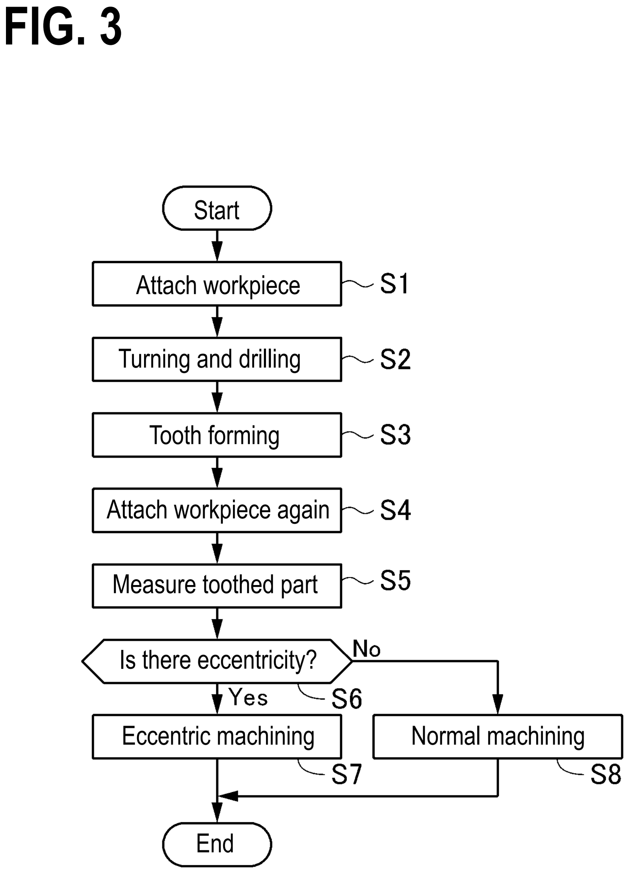

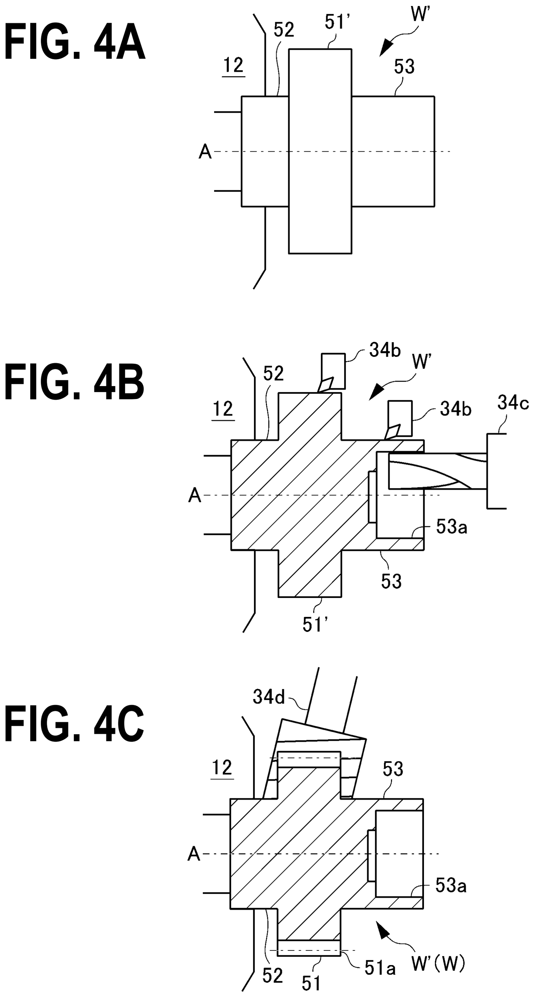

By referring to FIGs. 4A to 5C in accordance with FIG. 3, a machining procedure including the gear part machining method will be described.

First, a cylindrical material W', which is to be formed into the workpiece W, is attached to the first workpiece spindle 12 (S1).

By also referring to FIG. 4A, the cylindrical material W' includes a substantially disc-shaped tooth-forming circumferential portion 51' at a center of the cylindrical material W'. The tooth-forming circumferential portion 51' has a larger diameter. The cylindrical material W' also includes cylindrical shaft parts 52 and 53 on opposing sides of the tooth-forming circumferential portion 51'. The tooth-forming circumferential portion 51' and the shaft parts 52 and 53 are in a rough-machined state, with the cylindrical material W' having been preliminarily shaped into an outer circumferential surface and stepped side surfaces. Then, the first workpiece spindle 12 holds a proximity of one end portion of the shaft part 52, supporting the cylindrical material W' at one end. It is to be noted that the center axis A will be described later.

Next, by also referring to FIG. 4B, the tooth-forming circumferential portion 51' of the cylindrical material W' is subjected to turning. Substantially concurrently, the shaft part 53 is subjected to turning and drilling (S2). The shaft part 53 is the unheld side of the cylindrical material W' and corresponds to one end portion of the workpiece W. The turning of the tooth-forming circumferential portion 51' is a machining to form blanks for tooth forming, described later. Specifically, the turning is performed on the outer circumferential surface and stepped side surfaces of the tooth-forming circumferential portion 51'. The turning of the shaft part 53 is a finishing to form the shaft part 53 of the gear part. In these turnings, a turning tool 34b is used for machining purposes as the tool or the similar device 34 held by the tool holder 33a (see FIG. 1) of the mover 30. In contrast, the drilling of the shaft part 53 is a machining to form the hole 53a. In this drilling, a pre-formed hole is formed by cutting using, for example, a rotation tool 34c, such as a U drill, held by the tool holder 33a. Then, hole enlargement machining is performed using an end mill, not illustrated, or turning is performed on an inner circumferential surface of the pre-formed hole using a turning tool.

Next, by also referring to FIG. 4C, tooth forming is performed on the outer circumferential surface of the tooth-forming circumferential portion 51' to form the tooth portion 51a, resulting in the toothed part 51. Thus, the workpiece W is obtained from the cylindrical material W' (S3). In this example, a hobbing cutter 34d is attached to the tool holder 33a (see FIG. 1) of the mover 30. While the hobbing cutter 34d is being rotated, the cylindrical material W' is subjected to the tooth forming while being rotated about the rotation machining axis C of the first workpiece spindle 12 (see FIG. 1) in synchronization with the rotation of the hobbing cutter 34d. Then, the tooth portion 51a is subjected to burr removal, and the resulting tooth portion 51a is subjected to phase measurement. In this measurement, the touch probe 34a attached to the tool holder 33a may be used. It is to be noted that the automatic tool changer 45 is used to change the cutting tool or the measurement instrument, such as the touch probe 34a, attached to the tool holder 33a.

Incidentally, in the description set forth above, the cylindrical material W' is machined while being fixed to the first workpiece spindle 12. That is, the turning and the tooth forming are performed while the cylindrical material W' is being rotated about the rotation machining axis C of the first workpiece spindle 12. Due to this configuration, the center axis A of the shaft part 53 and the toothed part 51, which has been subjected to tooth forming, aligns with the rotation machining axis C. That is, in the description set forth above, the cylindrical material W' is machined while being rotated about the center axis A.

It is to be noted that in the machining described above, the cylindrical material W' may be held by the second workpiece spindle 22. In this case as well, a proximity of the one end portion of the shaft part 52 is held; while the cylindrical material W' is being rotated about the center axis A (the rotation machining axis C'), the shaft part 53 is subjected to turning to form teeth on the tooth-forming circumferential portion 51', obtaining the toothed part 51. Incidentally, at the next step, the shaft part 53 is held by the first workpiece spindle. In this respect, it is possible to transfer the workpiece W that has been obtained by machining the cylindrical material W' from the second workpiece spindle 22 to the first workpiece spindle 12 automatically by a motion of the machining apparatus 1, instead of by a worker's manual operation.

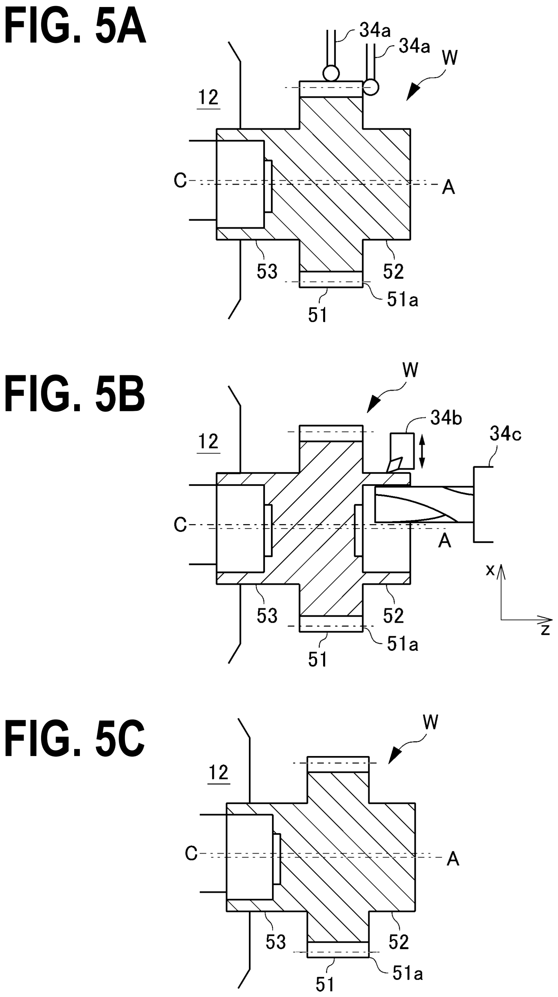

Next, by also referring to FIG. 5A, the workpiece W that has been obtained by forming the toothed part 51 on the cylindrical material W' is temporarily removed from the first workpiece spindle 12, or is transferred from the second workpiece spindle. Then, one end portion of the workpiece W, that is, the shaft part 53, which has been formed by turning, is held by the first workpiece spindle 12. Then, the workpiece W is attached to the workpiece spindle 12 with the axis A' (see FIG. 2) extending along the rotation machining axis C (S4). In this respect, the center axis A of the toothed part 51 of the workpiece W may become eccentric from the rotation machining axis C of the first workpiece spindle 12. This eccentricity is due to the re-holding of the workpiece W by the first workpiece spindle 12, or due to the transfer of the workpiece W from the second workpiece spindle 22.

In light of the eccentricity, as illustrated in FIG. 5B, in this embodiment, the shape and other features of the toothed part 51 are measured relative to the rotation machining axis C (S5). For example, the phase and the pitch of the tooth portion 51a of the toothed part 51 relative to the rotation machining axis C are measured. In this measurement, the touch probe 34a attached to the tool holder 33a may be used as a measurement instrument. It is to be noted that since the rotation machining axis C is used as a reference, the phase and the pitch are preferably measured while rotating the workpiece W about the rotation machining axis C.

In this respect, measurement data obtained by measuring the phase and the pitch is transmitted from the controller 40 of the machining apparatus 1 to the arithmetic operator 41 of the machining apparatus 1. Then, the operator 43 calculates a misalignment of the center axis A of the toothed part 51 relative to the rotation machining axis C of the first workpiece spindle 12. That is, an eccentricity amount and a rotation phase difference (the direction of eccentricity) of the center axis A relative to the rotation machining axis C can be calculated as the misalignment.

Then, the arithmetic operator 41 determines whether there is an eccentricity (S6). In this example, the arithmetic operator 41 determines that there is no eccentricity (S6; No) if the calculated eccentricity amount of the center axis A, that is, the eccentricity amount of the center axis A relative to the rotation machining axis C of the first workpiece spindle 12 is within a predetermined range. Then, the turning and drilling of the shaft part 52 are normally performed by, for example, performing turning about the rotation machining axis C of the first workpiece spindle 12 (S8).

In contrast, the arithmetic operator 41 determines that there is an eccentricity (S6; Yes) if the eccentricity amount is in excess of the predetermined range. Then, based on the eccentricity amount and the direction of eccentricity that have been obtained, that is, based on the calculated misalignment, the shaft part 52 is machined at another end portion of the workpiece W eccentrically relative to the rotation machining axis C (S7). In the eccentricity machining, the tool holder 33a holding a cutting tool such as the turning tool 34b is used as a cutting device.

For example, as illustrated in FIG. 5C, the workpiece W is rotated about the rotation machining axis C of the first workpiece spindle 12. While the workpiece W is being rotated in this manner, the outer circumferential surface of the shaft part 52 is machined eccentrically relative to the center axis A of the toothed part 51 by moving the turning tool 34b in radial directions (X axis directions) in synchronization with the rotation of the workpiece W. That is, eccentric machining is performed relative to the rotation machining axis C based on the eccentricity amount and the direction of eccentricity relative to the rotation machining axis C of the center axis A. Also, the one end portion of the shaft part 52 is subjected to drilling based on, for example, the center axis A to form the hole 52a. In this drilling, a pre-formed hole is formed by cutting using, for example, a rotation tool 34c, such as a U drill, held by the tool holder 33a. Then, hole enlargement machining using a rotation tool 34c, such as an end mill, or turning is performed on an inner circumferential surface of the pre-formed hole using a turning tool. Similarly to the above, the hole enlargement machining using the rotating rotation tool 34c and the turning using the turning tool are performed to ensure that these cuttings are performed about the center axis A eccentrically relative to the rotation machining axis C.

Insofar as a gear part is obtained by this method, the gear part ensures that the shaft part 52 at the side of the another end portion of the workpiece W is accurately machined with the center axis A of the toothed part 51 serving as a reference. That is, by performing machining with the center axis A of the toothed part serving as a reference, a center axis misalignment due to workpiece re-holding, machining defects, or other related causes can be corrected. It is to be noted that the center axis misalignment due to workpiece re-holding occurs when the workpiece spindle holds the workpiece again after the toothed part is formed. That is, a center axis misalignment can occur equally in a case that the same workpiece spindle re-holds the workpiece, in a case that the workpiece is transferred from a different workpiece spindle, and in a case that the workpiece is held after having been subjected to tooth forming at a different machining apparatus. Then, the misalignment can be corrected by the above-described method.

The workpiece W includes the toothed part 51, which is formed by performing tooth forming on the stepped cylindrical outer circumferential surface. In the above-described example, the shaft part 52, which is adjacent to the toothed part 51 in the axis A' direction, is machined. This example, however, is not intended as limiting the shape of the workpiece or the portion of the workpiece to be machined.

For example, the gear of the toothed part may be an internally-toothed gear or a bevel gear insofar as teeth are formed on a part of the circumferential surface of a cylindrical part which part of the circumferential surface extends in a direction along the axis A'. In this respect, by way of description, the workpiece will be regarded as a cylindrical part extending along the axis A' even in a case that the workpiece has a short dimension in the direction along the center axis of the toothed part or in a case that the workpiece has a hole inside the toothed part. The same applies in the portion to be machined irrespective of the gear product shape insofar as the portion is subjected to the following machining: after teeth are formed on the toothed part of the workpiece W about the rotation machining axis C (resulting in the center axis A), the one end portion of the workpiece in the direction along the axis A' is held, and the another end portion of the workpiece is subjected to cutting by bringing a cutting tool into proximity with the another end portion. Examples of such portion to be machined include an outer circumferential surface or an inner circumferential surface of a portion adjacent to or spaced apart from the toothed part in the axis A' direction; and an inner circumferential surface of the toothed part. In respect of the portion to be machined after the tooth forming, the portion that needs to be machined to make its center axis align with the center axis of the toothed part, that is, the portion that needs eccentric machining varies depending on the product application. Under the circumstances, the portions subjected to turning after the tooth forming may include a portion subjected to turning about the rotation machining axis in a normal manner, irrespective of whether this portion is subjected to eccentric machining.

The above-described machining method can be particularly suitably used in, for example, a gear part that needs re-holding or transfer of the workpiece after the tooth forming, such as a case that bottomed holes are formed at the center on both sides of a substantially disc-shaped gear in its axial direction. In a case that tooth forming is performed using milling, it is difficult to make the center axis of the toothed part align with the rotation machining axis, as compared with tooth forming performed using a hobbing cutter. In this case as well, the above-described machining method is suitable. It is to be noted that a gear part with teeth formed on the outer circumferential surface of the workpiece facilitates pitch measurement without shape dependency, ensuring that the above-described machining method can be suitably used.

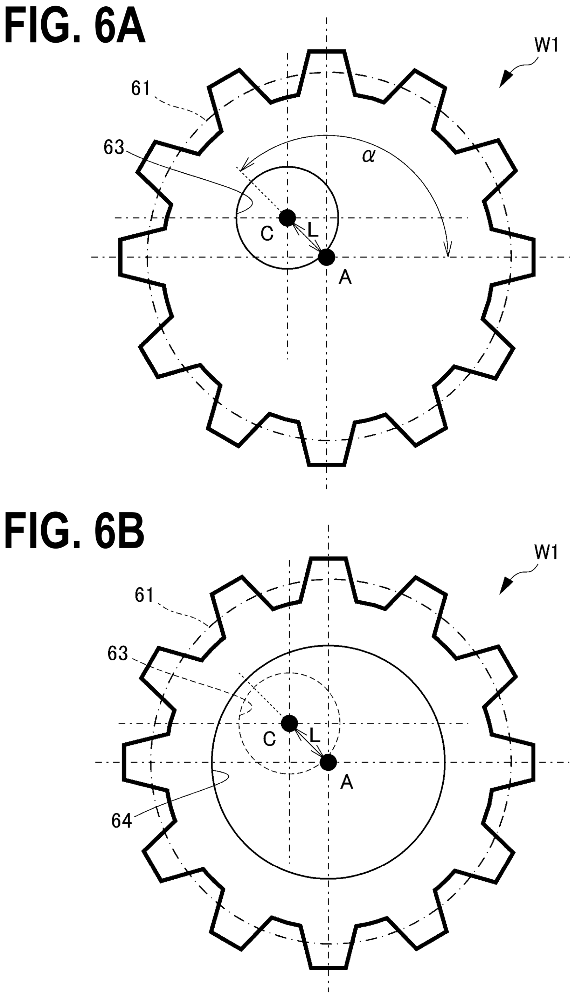

The same applies in a gear part subjected to axis hole forming after the tooth forming as illustrated in, for example, FIG. 6A. In this respect, an outer circumferential surface of a substantially disc-shaped workpiece W1 is denoted as toothed part 61. The toothed part 61 is formed by tooth forming about the center axis A. After the tooth forming, the workpiece W1 is held by a machining apparatus for drilling. Then, coordinates of the toothed part 61 about the rotation machining axis C of the machining apparatus are measured. Then, a misalignment of the center axis A of the toothed part 61 from the rotation machining axis C is calculated. The misalignment is calculated in terms of, for example, eccentricity amount *L* and rotation phase difference *α.* Then, in order to form an axis hole, a pre-formed hole 63 is formed by machining with, for example, the rotation machining axis C serving as a reference. In this respect, the rotation machining axis C, which is a center of the pre-formed hole 63, is misaligned from the center axis A by the eccentricity amount L.

In light of this misalignment, as illustrated in FIG. 6B, hole enlargement machining is performed as eccentric machining to make a center of an axis hole 64 align with the center axis A while rotating the workpiece W1 about the rotation machining axis C of the machining apparatus. In this case as well, eccentric machining is performed relative to the rotation machining axis C to correct the misalignment, ensuring that the machining to form the axis hole 64 is performed accurately with the center axis A of the toothed part 61 serving as a reference.

It is to be noted that the measurement of the toothed part is performed such that a point of the measurement is an intersection between the pitch circle and the surface of the tooth portion. As a result, the measurement value is obtained in the form of intermittent points. In this case, it is possible that the point of the measurement does not align with the eccentricity direction, causing an error between the rotation phase difference calculated from the point of the measurement and the actual rotation phase difference. In particular, this error tends to increase as the number of teeth is smaller. It is to be noted that in the measurement of the toothed part, the above-described pitch measurement to calculate the eccentricity amount and other parameters is preferable in that the degree of coaxiality between the toothed part and other portions increases. Additionally, an error caused by an eccentricity of a hobbing cutter has no influence on the outer circumferential circle (tooth tip). Therefore, this eccentricity can only be detected by pitch measurement.

As described above, there may be a case that an error is caused to occur due to the rotation phase difference calculated from the point of the measurement. In this case, a possible method is to: plot a graph of a relationship between pitch error and phase at each point of the measurement obtained from the measurement value; calculate a least-squares circle based on the plot; and obtain a cosine curve corresponding to the least-squares circle. By defining a peak of the obtained cosine curve as the rotation phase difference, an accurate eccentricity direction and an accurate eccentricity amount are obtained. It is possible to define the eccentricity direction and eccentricity amount by other known method. It is also possible to automatically determine the presence and absence of an eccentricity using the above-described graph of the relationship between pitch error and phase. For example, it is possible to calculate a value of a correlation with the cosine curve of the graph and determine the presence and absence of an eccentricity based on the value.

While a representative embodiment and modifications according to the present invention have been described hereinabove, the present invention will not be limited to the embodiment and modifications; it is to be appreciated that various changes may be made by one of ordinary skill in the art. That is, one of ordinary skill in the art would be able to conceive of various alternatives and modifications without departing from the scope of the appended claims.

### Reference Signs List

- 1: Machining apparatus
- 12: First workpiece spindle
- 22: Second workpiece spindle
- 30: Mover
- 33a: Tool holder
- 34a: Touch probe (measurement instrument)
- 34b: Turning tool
- 34c: Rotation tool
- 40: Controller
- 41: Arithmetic operator
- 45: Automatic tool changer
- 51: Toothed part
- 51a: Tooth portion
- 52, 53: Shaft part
- A: Center axis
- C: Rotation machining axis
- W: Workpiece
- W': Cylindrical material

## Claims

1. A gear part machining method comprising:
causing a workpiece spindle to hold one end portion of a cylindrical workpiece with an axis of the cylindrical workpiece aligned with a rotation machining axis, the cylindrical workpiece including a toothed part formed by performing tooth forming on a part of a circumferential surface of the cylindrical workpiece, the part of the circumferential surface extending along the axis of the cylindrical workpiece;
measuring the toothed part to calculate a misalignment between a center axis of the toothed part and the rotation machining axis; and
machining another end portion of the cylindrical workpiece eccentrically relative to the rotation machining axis based on the misalignment.

2. The gear part machining method according to claim 1, wherein the measuring of the toothed part includes measuring a pitch of a tooth portion of the toothed part while rotating the workpiece about the rotation machining axis.

3. The gear part machining method according to claim 2, wherein based on a rotation phase difference of the tooth portion of the toothed part, the misalignment is calculated as an eccentricity amount and an eccentricity direction of the center axis relative to the rotation machining axis.

4. The gear part machining method according to any one of claims 1 to 3, wherein the eccentric machining is performed while rotating the workpiece about the rotation machining axis.

5. The gear part machining method according to any one of claims 1 to 3, wherein the eccentric machining is performed using a rotatable rotation tool.

6. The gear part machining method according to any one of claims 1 to 3, wherein the toothed part is formed by performing the tooth forming on an outer circumferential surface of the workpiece.

7. The gear part machining method according to any one of claims 1 to 3, wherein the workpiece is formed by machining a cylindrical material by:
causing the workpiece spindle to hold the cylindrical material; and
turning a portion of the cylindrical material corresponding to the one end portion of the workpiece and performing the tooth forming to form the toothed part.

8. A gear-part machining program that:
causes a workpiece spindle to hold one end portion of a cylindrical workpiece with an axis of the cylindrical workpiece aligned with a rotation machining axis, the cylindrical workpiece including a toothed part formed by performing tooth forming on a part of a circumferential surface of the cylindrical workpiece, the part of the circumferential surface extending along the axis of the cylindrical workpiece;
causes the toothed part to be measured;
causes a misalignment between a center axis of the toothed part and the rotation machining axis to be calculated based on the measured measurement value; and
causes another end portion of the cylindrical workpiece to be machined eccentrically relative to the rotation machining axis based on the calculated misalignment.

9. The gear-part machining program according to claim 8, wherein the toothed part is measured by measuring a pitch of a tooth portion of the toothed part while rotating the workpiece about the rotation machining axis.

10. The gear-part machining program according to claim 9, wherein based on a rotation phase difference of the tooth portion of the toothed part, the misalignment is calculated as an eccentricity amount and an eccentricity direction of the center axis relative to the rotation machining axis.

11. The gear part machining program according to any of claims 8 to 10, wherein the workpiece is formed by machining a cylindrical material by:
causing the workpiece spindle to hold the cylindrical material; and
turning a portion of the cylindrical material corresponding to the one end portion of the workpiece and performing the tooth forming to form the toothed part.

12. A machining apparatus comprising:
a first workpiece spindle configured to hold a workpiece so as to be rotatable;
a tool holder configured to hold a measurement instrument or a tool;
a mover configured to move the first workpiece spindle and the tool holder relative to each other; and
a controller configured to control an operation of the first workpiece spindle, an operation of the tool holder, and an operation of the mover,
based on a machining program, the machining apparatus being configured to:
cause the first workpiece spindle to hold one end portion of the workpiece that has a cylindrical shape with an axis of the cylindrical workpiece aligned with a rotation machining axis, the cylindrical workpiece including a toothed part formed by performing tooth forming on a part of a circumferential surface of the cylindrical workpiece, the part of the circumferential surface extending along the axis of the cylindrical workpiece;
measure the toothed part using the measurement instrument held by the tool holder;
calculate a misalignment between a center axis of the toothed part and the rotation machining axis based on the measured measurement value; and
using the tool held by the tool holder, machine another end portion of the cylindrical workpiece eccentrically relative to the rotation machining axis based on the calculated misalignment.

13. The machining apparatus according to claim 12, further comprising a second workpiece spindle configured to hold the workpiece so as to be rotatable,
wherein the workpiece is formed by machining a cylindrical material by:
causing the second workpiece spindle to hold the cylindrical material; and
turning a portion of the cylindrical material corresponding to the one end portion of the workpiece and performing the tooth forming to form the toothed part.

14. The machining apparatus according to claim 12 or 13, further comprising a changer configured to change the tool and the measurement instrument held by the tool holder.
